# FASCICULE DE BREVET EUROPEEN

(11) **EP 4 587 260 B1**
(45) Date de publication et mention de la délivrance du brevet: **17.06.2026**
(21) Numéro de dépôt: 23776425.3
(22) Date de dépôt: 04.09.2023
(51) Int. Cl.: B29D 99/00, B29B 11/16, F01D 5/28, F01D 5/14, B64C 11/26, B29C 70/48, B29C 70/72, B29C 70/86, B29C 70/24, B29C 70/54

(54) **AUBE OU PALE D'HELICE AVEC PIED COMPOSITE CREUX**
PROPELLERBLATT ODER -SCHAUFEL MIT HOHLEM VERBUNDFUSS
PROPELLER BLADE OR VANE HAVING A HOLLOW COMPOSITE ROOT

(30) Priorité: 13.09.2022 FR 2209179
(43) Date de publication de la demande: 23.07.2025
(73) Titulaire: SAFRAN AIRCRAFT ENGINES, 75015 Paris (FR); SAFRAN, 75015 Paris (FR)
(72) Inventeur: POSTEC, Clément, Pierre, 77550 MOISSY-CRAMAYEL (FR); MAISON, Vincent, Lionel, René, 77550 MOISSY-CRAMAYEL (FR); FAIVRE D'ARCIER, Pierre, Jean, 77550 MOISSY-CRAMAYEL (FR); MINERVINO, Mattéo, 77550 MOISSY-CRAMAYEL (FR); CHARLEUX, François, 77550 MOISSY-CRAMAYEL (FR)
(74) Mandataire: Cabinet Beau de Loménie
(86) Numéro de dépôt international: PCT/FR2023/051326
(87) Numéro de publication internationale: WO 2024/056959

(56) Documents cités:
- US-A1- 2013 017 093
- US-A1- 2019 217 943

## Description

### Domaine Technique

La présente invention se rapporte au domaine des aubes ou pales d'hélice pour aéronefs telles que celles présentes sur les turbopropulseurs.

### Technique antérieure

Les aubes ou pales d'hélice pour turbopropulseurs sont généralement réalisées en matériau métallique. Si les aubes ou pales d'hélice en matériau métallique ont une bonne résistance mécanique, elles présentent toutefois l'inconvénient d'avoir une masse relativement importante.

Afin d'obtenir des aubes ou pales d'hélice plus légères, il est connu de réaliser des pales d'hélice en matériau composite, c'est-à-dire en réalisant des pièces de structure à renfort fibreux densifié par une matrice.

Le document US 2013/0017093 décrit la réalisation d'une pale d'hélice à partir d'une structure fibreuse à profil aérodynamique à l'intérieur de laquelle est introduite une partie d'un longeron, une extrémité du longeron étant prolongée par une portion renflée destinée à former le pied de la pale d'hélice.

La nouvelle génération de moteurs nécessite des pieds d'aube ou de pale plus compacts. Ce besoin vient de la nécessité de pouvoir faire pivoter l'aube ou la pale autour de son axe vertical afin d'adapter son incidence au régime de vol (aube ou pale à pas variable). Ce besoin, combiné au fait que l'aube ou la pale doit être intégrée le plus bas possible sur le disque, impose de réduire fortement l'encombrement du pied.

A cet effet, les pieds des aubes ou pales de nouvelle génération présentent une forme axisymétrique ou sensiblement axisymétrique ainsi que des dimensions réduites contrairement aux pieds de l'art antérieur comme ceux décrits dans le document US 2013/0017093 qui s'étendent sur toute la largeur de la partie inférieure de l'aube ou pale.

Cette forme axisymétrique ou quasi-axisymétrique est plus difficile à fabriquer en matériau composite, en particulier lorsque le tissage tridimensionnel (3D) est utilisé pour former le renfort fibreux de l'aube ou de la pale.

Par ailleurs, les chargements mécaniques auxquels sont soumis les pieds de nouvelle génération imposent des contraintes supplémentaires. En effet, en outre des chargements mécaniques en traction et en flexion habituellement rencontrés (causés respectivement par les efforts centrifuges et les impacts avec des objets), les pieds de nouvelle génération peuvent être intégrés dans le disque du rotor à l'aide de coquilles métalliques, ce qui entraîne un chargement mécanique supplémentaire en compression circonférentielle.

### Exposé de l'invention

Il est donc souhaitable de pouvoir proposer une solution pour la réalisation d'aubes ou pales d'hélice d'aéronef en matériau composite avec un pied compact et apte à résister aux différents chargements mécaniques.

A cet effet, la présente invention propose un procédé de fabrication d'une aube ou pale d'hélice de turbopropulseur en matériau composite comprenant un renfort fibreux densifié par une matrice, le procédé comprenant :
- la réalisation par tissage tridimensionnel d'une ébauche fibreuse en une seule pièce, l'ébauche fibreuse présentant une forme plate s'étendant suivant une direction longitudinale et une direction transversale correspondant respectivement à la direction d'envergure entre une partie inférieure et une partie supérieure et à la direction de corde de l'aube ou la pale d'hélice à fabriquer, l'ébauche fibreuse comprenant une partie de pied et une partie de profil aérodynamique s'étendant suivant la direction longitudinale à partir de la partie de pied et suivant la direction transversale entre une portion de bord d'attaque et une portion de bord de fuite,
- la mise en forme de l'ébauche fibreuse pour obtenir une préforme fibreuse en une seule pièce ayant ladite partie de profil aérodynamique formant préforme de profil aérodynamique et ladite partie de pied formant préforme de pied, et
- la densification de la préforme fibreuse par une matrice pour obtenir une pièce intermédiaire en matériau composite ayant un renfort fibreux constitué par la préforme fibreuse et densifié par la matrice, la pièce intermédiaire comprenant une partie de profil aérodynamique et une partie de pied,
caractérisé en ce que la partie de pied de l'ébauche fibreuse comprend une déliaison délimitant un logement interne s'étendant à la fois dans la partie de pied et dans la partie de profil aérodynamique de l'ébauche fibreuse, le logement interne débouchant au niveau d'une partie inférieure de l'ébauche fibreuse, en ce que la mise en forme de l'ébauche fibreuse comprend l'insertion d'un longeron dans le logement interne, le longeron comprenant une portion de conformation de profil aérodynamique positionnée dans la partie de profil aérodynamique de l'ébauche fibreuse et une portion de conformation de pied positionnée dans la partie de pied de l'ébauche fibreuse de manière à former respectivement une partie de préforme de profil aérodynamique et une partie de préforme de pied, et en ce que le procédé comprend en outre, après l'étape de densification, une étape d'usinage de la partie de pied de la pièce intermédiaire en matériau composite suivant un rayon déterminé de manière à former une aube ou une pale d'hélice comprenant un pied présentant une forme de révolution et un profil aérodynamique.

Le procédé de l'invention permet ainsi de réaliser une pale d'hélice ou une aube avec un pied composite qui est à la fois compact et parfaitement adapté pour résister aux différents chargements mécaniques décrits précédemment. En effet, la partie de renfort fibreux du pied est réalisée en tissage 3D et présente une forme de révolution qui est reliée à la partie de renfort fibreux du profil aérodynamique en son centre. On obtient ainsi un pied composite bien plus compact que celui de l'art antérieur qui s'étend généralement sur toute la largeur de la partie inférieure du profil aérodynamique. Dans ce pied composite, il y a des fils, par exemple des fils de chaîne, orientés dans la direction d'envergure de la pale ou de l'aube qui confère à celle-ci une bonne résistance mécanique en traction et en flexion par combinaison avec le tissage 3D. En outre, dans le pied composite, il y a des fils, par exemple des fils de trame, orientés dans la direction de corde de la pale ou de l'aube qui confère à celle-ci une bonne résistance mécanique en compression circonférentielle.

Par ailleurs, la forme de révolution du pied est compatible avec une intégration dans un système de rotation ou changement de pas d'hélice.

En insérant un longeron dans le renfort fibreux dans lequel une partie de pied est intégralement formée, c'est-à-dire tissée en une seule pièce, avec une partie de profil aérodynamique, on assure une très bonne tenue mécanique de l'ensemble de la pièce et, en particulier, vis-à-vis des efforts auxquels le pied peut être soumis. Selon un aspect du procédé de l'invention, la déliaison présente dans la partie de pied de l'ébauche fibreuse et la portion de conformation de pied du longeron présentent suivant la direction transversale une largeur supérieure au rayon d'usinage de la partie de pied de la pièce intermédiaire en matériau composite. Cela permet le passage de tout le longeron par la partie de pied de l'ébauche fibreuse. Selon un autre aspect du procédé de l'invention, le longeron est en matériau composite comprenant un renfort fibreux densifié par une matrice ou en matériau métallique.

Selon un autre aspect du procédé de l'invention, la mise en forme de l'ébauche fibreuse comprend en outre l'insertion d'une pièce de conformation en matériau rigide alvéolé autour de la portion de conformation de profil aérodynamique du longeron.

Selon un autre aspect du procédé de l'invention, la mise en forme de l'ébauche fibreuse comprend en outre l'injection d'un matériau expansif autour de la portion de conformation de profil aérodynamique du longeron.

L'invention a également pour objet une aube ou pale d'hélice de turbopropulseur en matériau composite comprenant un renfort fibreux densifié par une matrice, l'aube ou la pale d'hélice comportant suivant une direction d'envergure un pied et un profil aérodynamique, le pied et le profil aérodynamique s'étendant suivant une direction de corde entre un bord d'attaque et un bord de fuite, le renfort fibreux comprenant une préforme fibreuse présentant un tissage tridimensionnel avec une partie de préforme de pied présente dans le pied et une partie de préforme de profil aérodynamique présente dans le profil aérodynamique, les parties de préforme de pied et de profil aérodynamique étant liées l'une à l'autre par le tissage tridimensionnel, caractérisée en ce que la préforme fibreuse comprend une déliaison délimitant un logement interne débouchant au niveau de la partie de préforme de pied, le logement formant une cavité s'étendant à la fois dans le pied et dans le profil aérodynamique, en ce qu'un longeron est présent dans la cavité, le longeron comprenant une portion de conformation de profil aérodynamique positionnée dans une première portion de la cavité et une portion de conformation de pied positionnée dans une deuxième portion de la cavité, et en ce que le pied de l'aube ou de la pale d'hélice présente une forme de révolution.

Selon un aspect de l'aube ou pale d'hélice de l'invention, la portion de conformation de pied du longeron est exposée au niveau du bord d'attaque et du bord de fuite du pied d'aube ou de pale d'hélice, le reste de la portion de conformation de pied du longeron étant recouvert par la préforme fibreuse.

Selon un autre aspect de l'aube ou pale d'hélice de l'invention, le longeron est en matériau composite comprenant un renfort fibreux densifié par une matrice ou en matériau métallique.

L'invention couvre en outre un moteur aéronautique comprenant une pluralité d'aubes ou de pales d'hélice selon l'invention ainsi qu'un aéronef comprenant au moins un tel moteur.

### Brève description des dessins

[Fig. 1] La figure 1 est une vue schématique illustrant le tissage 3D d'une ébauche fibreuse pour la fabrication d'une aube,
[Fig. 2] La figure 2 est une vue en coupe en sens trame à échelle agrandie d'un ensemble de couches de fils montrant la formation de d'une déliaison dans la partie de pied de l'ébauche de la figure 1 selon un plan de coupe II-II,
[Fig. 3] La figure 3 est une vue schématique en perspective montrant la mise en forme d'une partie de préforme de pied et d'une partie de préforme de profil aérodynamique dans l'ébauche fibreuse de la figure 1,
[Fig. 4] La figure 4 est une vue schématique en perspective éclatée montrant un outillage d'injection et le placement de la préforme fibreuse à l'intérieur de celui-ci conformément à un mode de réalisation de l'invention,
[Fig. 5] La figure 5 est une vue schématique en perspective montrant l'outillage d'injection de la figure 4 fermé,
[Fig. 6] La figure 6 est une vue schématique en perspective d'une pièce intermédiaire en matériau composite obtenue conformément à un mode de réalisation de l'invention,
[Fig. 7] La figure 7 est une vue schématique en perspective d'une aube en matériau composite obtenue après usinage de la partie de pied de la pièce intermédiaire de la figure 6.

### Description des modes de réalisation

L'invention s'applique d'une manière générale à différents types d'aubes ou pales d'hélice utilisées dans des moteurs d'aéronefs. L'invention trouve une application avantageuse mais non exclusive dans des aubes ou pales d'hélice de grandes dimensions qui sont destinées à être intégrées à des systèmes de pivotement ou pas variable. De telles aubes ou pales d'hélice sont en général munies d'un pied dit « cylindrique », c'est-à-dire présentant une forme de révolution, et une bonne résistance vis-à-vis d'efforts en traction, flexion et compression circonférentielle. L'aube selon l'invention peut notamment constituer une aube pour roues mobiles carénées telles que des aubes de soufflante ou une aube pour roues mobiles non carénées comme dans les moteurs aéronautiques dits « open rotor ».

Dans la suite de la description, les exemples de réalisation sont décrits en relation avec des aubes pour turbopropulseur. Toutefois, les exemples de réalisation s'appliquent également à des pales d'hélice pour aéronefs.

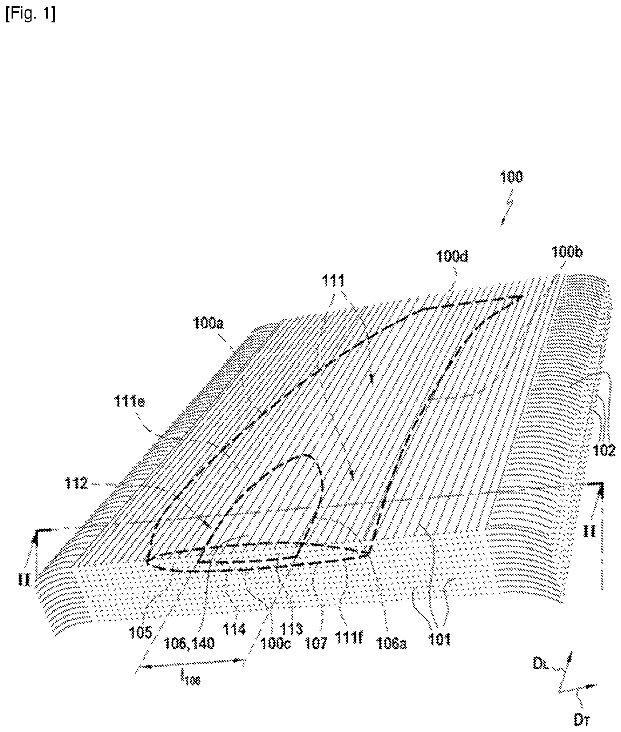

La figure 1 montre très schématiquement une ébauche fibreuse 100 destinée à former la préforme fibreuse d'une aube à réaliser.

L'ébauche de structure fibreuse 100 est obtenue, comme illustrée schématiquement sur la figure 1, par tissage tridimensionnel (3D) réalisé de façon connue au moyen d'un métier à tisser de type jacquard sur lequel on a disposé un faisceau de fils de chaînes 101 ou torons en une pluralité de couches de plusieurs centaines de fils chacune, les fils de chaînes étant liés par des fils de trame 102. L'ébauche de structure fibreuse 100 est tissée en une seule pièce, l'ébauche s'étendant dans une direction longitudinale D_{L}, correspondant à la direction d'envergure de l'aube à fabriquer, entre une partie inférieure 100c et une partie supérieure 100d et dans une direction transversale D_{T}, correspondant à la direction de corde de l'aube à fabriquer entre un bord avant 100a et un bord arrière 100b, l'ébauche comprenant une partie de profil aérodynamique 111 définissant deux faces 111e et 111f destinées à former respectivement les faces extrados et intrados de l'aube et une partie de pied 112 destinée à former ultérieurement un pied d'aube et s'étendant à l'extérieur de l'ébauche de profil aérodynamique 111 suivant la direction longitudinale D_{L} et en retrait des bords avant et arrière 100a et 100b suivant la direction transversale D_{T}. Par "tissage tridimensionnel" ou "tissage 3D", on entend ici un mode de tissage par lequel certains au moins des fils de chaîne lient des fils de trame sur plusieurs couches de trame comme par exemple un "tissage interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

D'autres types de tissage tridimensionnel connus pourront être utilisés, comme notamment ceux décrits dans le document WO 2006/136755. Ce document décrit notamment la réalisation par tissage en une seule pièce de structures fibreuses de renfort pour des pièces telles que des aubes ayant un premier type d'armure à cœur et un deuxième type d'armure en peau qui permettent de conférer à la fois les propriétés mécaniques et aérodynamiques attendues pour ce type de pièce.

L'ébauche fibreuse selon l'invention peut être tissée notamment à partir de fils de fibres de carbone ou de céramique tel que du carbure de silicium.

Au fur et à mesure du tissage de l'ébauche fibreuse dont l'épaisseur et la largeur varient, un certain nombre de fils de chaîne ne sont pas tissés, ce qui permet de définir le contour et l'épaisseur voulue, continûment variable, de l'ébauche 100. Un exemple de tissage 3D évolutif permettant notamment de faire varier l'épaisseur de l'ébauche entre un premier bord destiné à former le bord d'attaque et un deuxième bord d'une épaisseur moindre et destiné à former le bord de fuite est décrit dans le document US 2006/257260.

Conformément à l'invention, lors du tissage, une déliaison 106 est réalisée à l'intérieur de l'ébauche fibreuse 100 entre deux couches successives de fils de chaîne. La déliaison 106 s'étend suivant un plan parallèle à la surface de l'ébauche fibreuse et sur une zone de déliaison délimitée par un contour 106a séparant localement l'ébauche fibreuse 100 en deux portions tissées 113 et 114. Dans la direction longitudinale D_{L}, la déliaison 106 traverse la partie de pied 112 de l'ébauche fibreuse 100 et pénètre partiellement dans la partie de profil aérodynamique 111 de l'ébauche fibreuse 100. En outre, la déliaison 106 s'étend dans la direction transversale D_{T} entre le bord avant 100a et le bord arrière 100b de l'ébauche 100 et en retrait de ces bords, c'est-à-dire que la déliaison 106 ne débouche pas sur les bords avant 100a et arrière 100b de manière à conserver des portions de liaison 105 et 107 adjacentes respectivement au bord avant 100a et au bord arrière 100b. La déliaison 106 débouche en outre au niveau de la partie inférieure 100c. La déliaison 106 forme ainsi un logement interne 140 qui est accessible par la partie inférieure 100c.

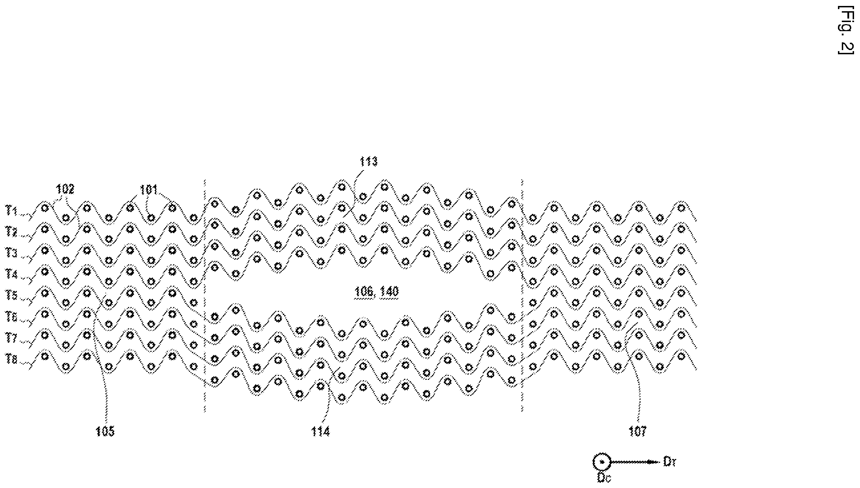

Un mode de tissage 3D à armure interlock de l'ébauche 100 est montré schématiquement par la figure 2. La figure 2 est une vue partielle agrandie d'un plan en coupe chaîne dans une partie de l'ébauche 100 comportant la zone de déliaison 106 (coupe II-II sur la figure 1). Dans cet exemple, l'ébauche 100 comprend 8 couches de fils de chaîne 101 s'étendant sensiblement dans la direction longitudinale D_{L}. Sur la figure 2, les 8 couches de fils de chaîne sont liées par des fils de trame T₁ à T₈ dans les zones de liaison 105 et 107 de l'ébauche fibreuse 100, les fils de trame s'étendant sensiblement dans la direction transversale D_{T}. Au niveau de la déliaison 106, la portion tissé 113 comprend 4 couches de fils de chaîne 101 liées entre elles par 4 fils de trame T₁ à T₄ tandis que la potion tissée 114 comprend les 4 couches de fils de chaîne formant l'ensemble de couches de fils 109 sont liés par 4 fils de trame T₅ à T₈.

En d'autres termes, le fait que les fils de trame T₁ à T₄ ne s'étendent pas dans les couches de fils de chaîne de la portion tissée 114 et que les fils de trame T₅ à T₈ ne s'étendent pas dans les couches de fils de chaîne de la portion tissée 113 assure la déliaison 106 qui sépare les portions tissées 113 et 114.

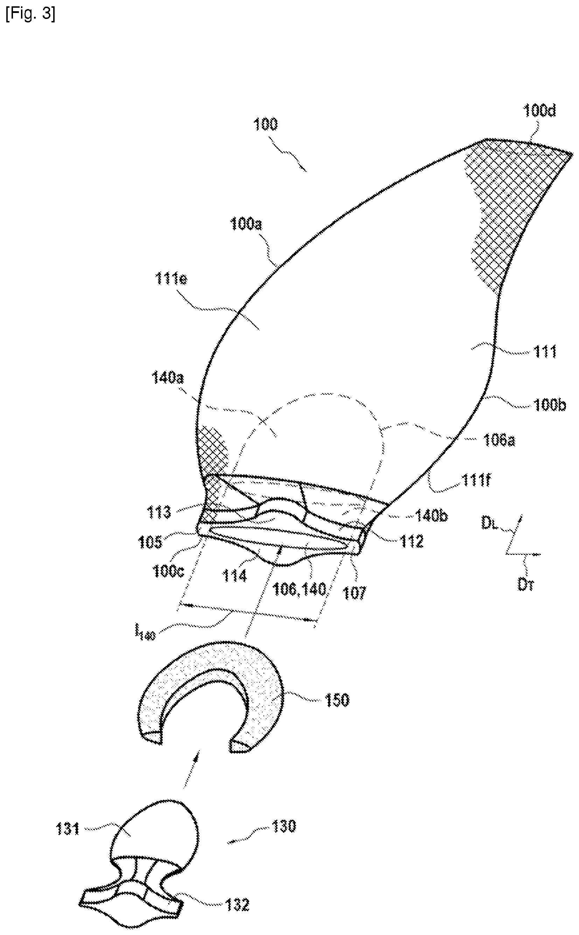

Une fois le tissage terminé, les fils non tissés présents autour de l'ébauche fibreuse 100 sont découpés pour extraire l'ébauche puis on procède à la mise en forme de la partie de pied de l'ébauche. Dans l'exemple décrit ici, la mise en forme de la partie de pied 112 est réalisée en écartant les portions tissées 113 et 114 et en introduisant un longeron 130 dans le logement interne 140 formé par la déliaison 106 comme illustré sur la figure 3. Le longeron 130 comprend une portion de conformation de profil aérodynamique 131 qui est positionnée dans une partie supérieure ou fond 140a du logement 140 présent dans la partie de profil aérodynamique 111 de l'ébauche fibreuse 100. Le longeron 130 comprend également une portion de conformation de pied 132 qui est positionnée dans une partie inférieure ou début 140b du logement 140 présent dans la partie de pied 112 de l'ébauche fibreuse 100. Le logement 140 s'étend au niveau de sa partie inférieure 140b et suivant la direction transversale D_{T} sur une largeur l₁₄₀ qui est supérieure au diamètre final du pied d'aube ou de pale d'hélice à réaliser comme expliqué ci-après. La largeur l₁₄₀ correspond à la largeur l₁₀₆ de la déliaison 106 dans l'ébauche fibreuse 100 (figure 1). Une telle largeur est nécessaire pour permettre le passage de la portion de conformation de profil aérodynamique 111 au travers de la partie inférieure 140b du logement 140. La portion de conformation de pied 132 du longeron 130 présente une forme allongée suivant la direction transversale D_{T} afin de s'adapter à la largeur l₁₄₀ du logement dans la partie inférieure 140b du logement en particulier afin de contrôler le maintien en forme de la préforme dans l'outillage d'injection.

Le longeron 130 peut être réalisé en différents matériaux. Il peut notamment être réalisé en matériau composite comprenant un renfort fibreux obtenu par tissage tridimensionnel ou empilement de plis fibreux bidimensionnel et densifié par une matrice. Le longeron peut également être réalisé en matériau métallique.

Dans l'exemple décrit ici une pièce de conformation 150 en matériau rigide alvéolé comme par exemple une mousse rigide est positionnée autour de la portion de conformation de profil aérodynamique 131 du longeron.

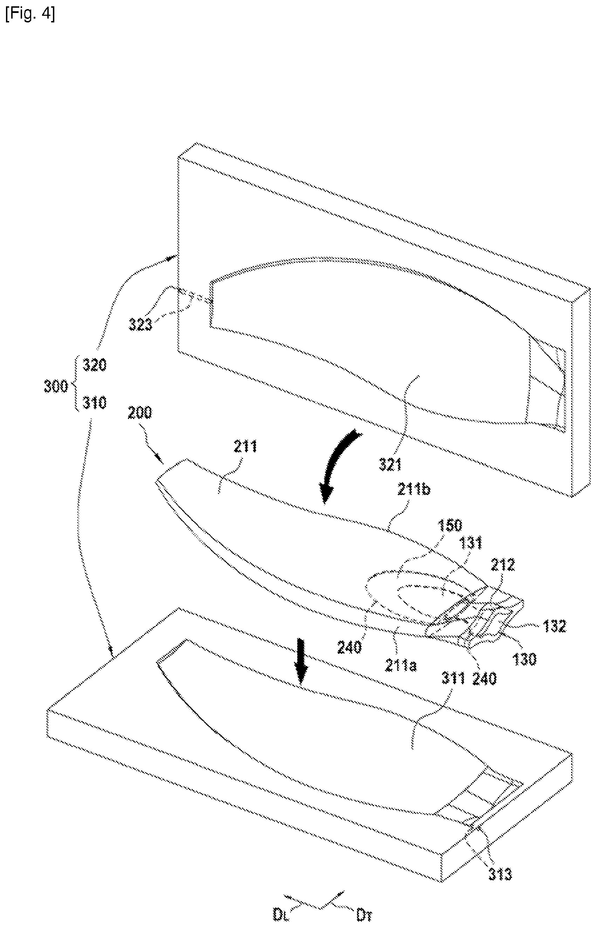

On obtient ainsi une préforme fibreuse 200 comprenant suivant la direction longitudinale DL une partie de préforme de profil aérodynamique 211 et une partie de préforme de pied 212 présentant une forme renflée avec un logement interne 240 comprenant le longeron 130 comme représentée sur la figure 4. La partie de préforme de profil aérodynamique 211 s'étendant suivant la direction transversale D_{T} entre une partie de bord d'attaque 211a et une partie de bord de fuite 211b.

On procède ensuite à la densification de la préforme fibreuse. La densification de la préforme fibreuse destinée à former le renfort fibreux de la pièce à fabriquer consiste à combler la porosité de la préforme, dans tout ou partie du volume de celle-ci, par le matériau constitutif de la matrice. Cette densification est réalisée de façon connue en soi suivant le procédé par voie liquide (CVL). Le procédé par voie liquide consiste à imprégner la préforme par une composition liquide contenant un précurseur du matériau de la matrice. Le précurseur se présente habituellement sous forme d'un polymère, tel qu'une résine époxyde à hautes performances, éventuellement dilué dans un solvant. La préforme est placée dans un moule pouvant être fermé de manière étanche avec un logement ayant la forme de l'aube finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Selon un aspect de l'invention, dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

Comme illustré sur la figure 4, l'injection d'une composition liquide précurseur de matrice dans la texture fibreuse ainsi que sa transformation en matrice sont ici réalisées dans un outillage d'injection 300 qui comprend une première coquille 310 comprenant en son centre une première empreinte 311 correspondant en partie à la forme et aux dimensions de l'aube à réaliser et une deuxième coquille 320 comprenant en son centre une deuxième empreinte 321 correspondant en partie à la forme et aux dimensions de l'aube à réaliser.

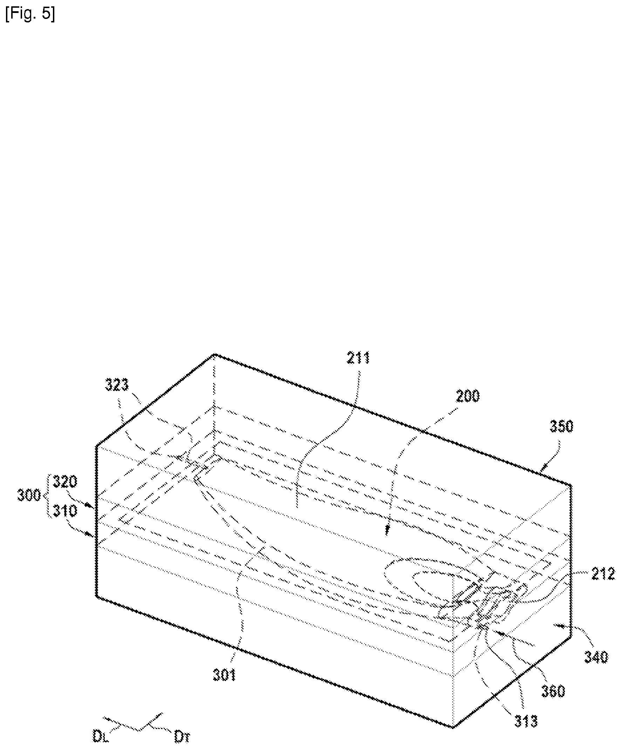

Une fois l'outillage 300 fermé comme illustré sur la figure 5, les première et deuxième empreintes 311 et 321 respectivement des première et deuxième coquilles 310 et 320 définissent ensemble un volume interne 301 ayant la forme de l'aube à réaliser et dans lequel est placée la préforme fibreuse 200. Un compactage de la préforme fibreuse 200 peut être réalisé avec la fermeture de l'outillage 300 afin d'obtenir un taux de fibres déterminé dans la préforme. Dans ce cas, une pression de compactage est appliquée sur les coquilles 310 et 320 par exemple au moyen d'une presse. Le compactage de la préforme fibreuse peut également être réalisé dans un outillage séparé avant l'introduction de la préforme dans l'outillage d'injection.

L'outillage 300 comprend en outre des moyens permettant de réaliser l'injection d'un précurseur liquide de matrice et la transformation de ce précurseur en matrice. Plus précisément, dans l'exemple décrit ici, la première coquille 310 de l'outillage 300 comprend un port d'injection 313 destiné à permettre l'injection d'une composition liquide précurseur de matrice dans la préforme fibreuse tandis que la deuxième coquille comprend un port d'évacuation 323 destiné à coopérer avec un système de pompage pour la mise sous vide de l'outillage et le tirage d'air lors de l'injection. L'outillage d'injection 300 comprend également une partie inférieure 340 et une partie supérieure 350 entre lesquels les première et deuxième coquilles 310 et 320 sont placées, la partie inférieure 340 et la partie supérieure 350 étant équipées de moyens de chauffage (non représentés sur la figure 5).

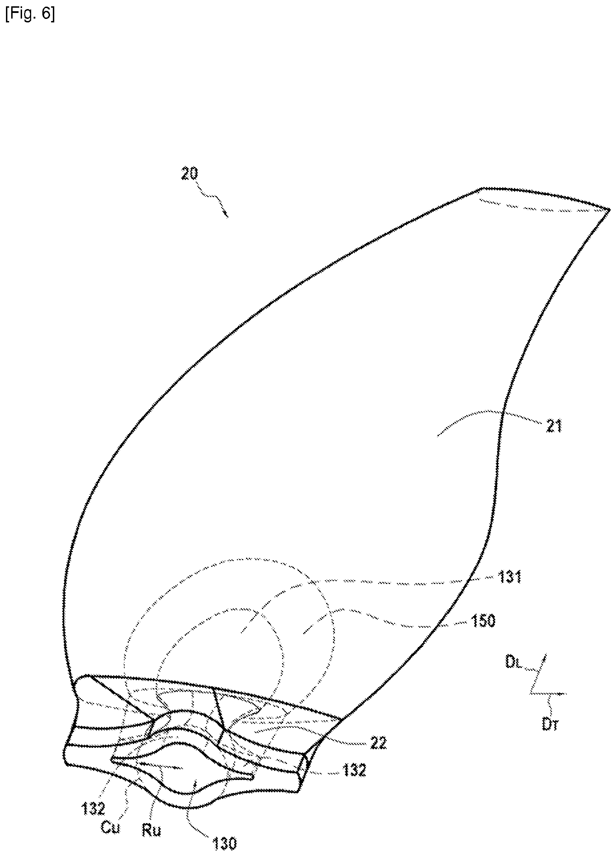

Une fois l'outillage 300 fermé, on procède au moulage de l'aube en imprégnant la préforme 200 avec une résine thermodurcissable que l'on polymérise par traitement thermique. On utilise à cet effet le procédé bien connu de moulage par injection ou transfert dit RTM ("Resin Transfert Moulding"). Conformément au procédé RTM, on injecte via le port d'injection 313 de la première coquille 310 une résine 360, par exemple une résine thermodurcissable, dans le volume interne occupé par la préforme 200. Le port 323 de la deuxième coquille 320 est relié à un conduit d'évacuation maintenu sous pression (non représentés sur la figure 6). Cette configuration permet l'établissement d'un gradient de pression entre la partie inférieure de la préforme 200 où la résine est injectée et la partie supérieure de la préforme située à proximité du port 323. De cette manière, la résine 360 injectée sensiblement au niveau de la partie inférieure de la préforme va imprégner progressivement l'ensemble de la préforme en circulant dans celle-ci jusqu'au port d'évacuation 323 par lequel le surplus est évacué. Bien entendu, les première et deuxième coquilles 310 et 320 de l'outillage 300 peuvent comprendre respectivement plusieurs ports d'injection et plusieurs ports d'évacuation. Le procédé RTM peut être également réalisé sous vide (VA-RTM).

La résine utilisée peut être, par exemple, une résine époxyde de classe de température 180 °C. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Les procédés de densification décrits ci-avant permettent de réaliser, à partir de la préforme fibreuse de l'invention, principalement des aubes ou pales d'hélices en matériau composite à matrice organique (CMO), à matrice carbone (C/C) et à matrice céramique (CMC).

Après l'injection, la polymérisation et le démoulage, on obtient, comme illustrée sur la figure 6, une pièce intermédiaire en matériau composite 20 ayant un renfort fibreux constitué par la préforme fibreuse 200 et densifié par la matrice, la pièce intermédiaire 20 comprenant une partie de profil aérodynamique 21 et une partie de pied 22.

On procède ensuite à l'usinage de la partie de pied 22 de la pièce intermédiaire en matériau composite 20 suivant un rayon R_{U} déterminé qui définit un contour d'usinage C_{U} de manière à former un pied présentant une forme de révolution. La partie de pied 22 est donc usinée afin d'enlever la matière présent en dehors du contour d'usinage C_{U} et de former un pied de forme de révolution. On voit sur la figure 6 qu'une partie de la portion de conformation de pied 132 du longeron 130 s'étend au-delà du contour d'usinage C_{U}. L'usinage consiste donc ici à enlever la partie de préforme fibreuse densifiée présentent en dehors du contour d'usinage C_{U} ainsi que la partie de la portion de conformation de pied 132 du longeron 130 également présente en dehors du contour C_{U}.

Au final, l'aube est détourée pour enlever l'excès de résine et les chanfreins sont usinés. Aucun autre usinage n'est nécessaire puisque, la pièce étant moulée, elle respecte les cotes exigées.

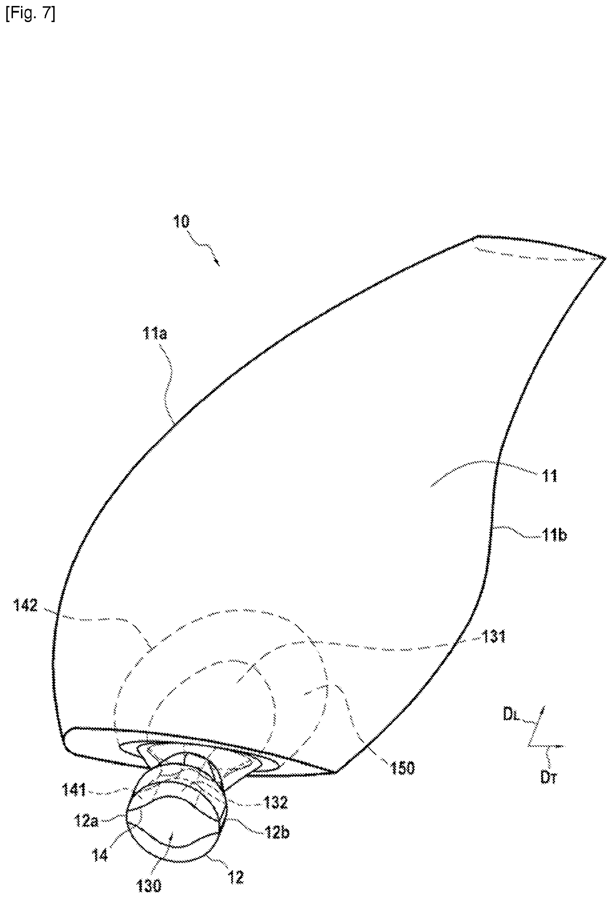

Comme illustrée sur la figure 7, on obtient une aube 10 formée d'un renfort fibreux densifié par une matrice qui comporte dans sa partie inférieure un pied 12 formé par la partie de préforme de pied 212 usinée et une pale 11 formée par la partie de préforme de pale 211 de la préforme fibreuse 200. L'aube 10 comporte un bord d'attaque 11a et un bord de fuite 11b correspondant respectivement aux parties de bord d'attaque 211a et de bord de fuite 211b de la préforme fibreuse 200. Le pied 12 comprend une cavité 14 formée par le logement interne 240 de la préforme fibreuse 200, la cavité 14 comprenant le longeron 130 collé à l'intérieur de ladite cavité 14, la portion de conformation de profil aérodynamique 131 du longeron 130 étant présente et collée dans une première portion 142 de la cavité 14 correspondant à la partie supérieure 140a du logement 140 présent dans la partie de profil aérodynamique 111 de l'ébauche fibreuse 100 tandis que la portion de conformation de pied 132 du longeron 130 est présente et collée dans une deuxième portion 141 de la cavité 14 correspondant à la partie inférieure 140b du logement 140 présent dans la partie de pied 112 de l'ébauche fibreuse 100.

Comme on peut le voir sur la figure 7, la portion de conformation de pied 132 du longeron 13 est exposée au niveau du bord d'attaque 12a et du bord de fuite 12b du pied d'aube ou de pale d'hélice12, le reste de la portion de conformation de pied du longeron étant recouvert par la préforme fibreuse densifiée. Cette exposition partielle du longeron au niveau du pied d'aube ou de pale d'hélice résulte de l'usinage de la partie de pied 22 de la pièce intermédiaire 20 suivant un diamètre inférieur à la surlargeur de la déliaison 106 au niveau de la partie de l'ébauche fibreuse 100 destinée à former le pied d'aube ou de pale d'hélice. Toutefois, grâce à la forme allongée de la portion de conformation de pied 132 du longeron 130, la majeure partie du périmètre externe du pied 12 est constituée par la partie de préforme de pied 212 de la préforme fibreuse 200. En conservant majoritairement le renfort fibreux sur le périmètre externe du pied 12, on améliore la résistance de l'aube ou de la pale d'hélice dans cette zone qui est soumise à des efforts importants en flexion dus aux chargements aérodynamiques de l'aube ou de la pale d'hélice. Le renfort fibreux présentant un tissage tridimensionnel continu depuis le pied jusqu'au sommet du profil aérodynamique, il est parfaitement apte à transférer des efforts locaux au reste de l'aube ou pale d'hélice et d'augmenter ainsi sa résistance mécanique.

Dans l'exemple décrit ci-avant, une pièce de conformation en matériau rigide alvéolé est positionnée autour de la portion de conformation de profil aérodynamique du longeron. L'utilisation d'une telle pièce de conformation est toutefois optionnelle, le longeron pouvant avoir une forme adaptée pour combler tout le volume du logement interne présent dans la partie de profil aérodynamique. L'utilisation d'une pièce de conformation additionnelle en matériau rigide alvéolé permet de réduire la masse globale de l'aube ou de la pale d'hélice. La pièce de conformation peut en outre être réalisée in situ autour de la portion de conformation de profil aérodynamique en injectant un matériau expansif. Dans ce cas, des éléments de comblement aptes à être dissouts comme des noyaux de sels sont provisoirement positionnés dans la préforme fibreuse avant l'injection de la matrice. Une fois la pièce intermédiaire réalisée, c'est-à-dire, après densification de la préforme fibreuse, les éléments de comblement sont éliminés et un matériau expansif est injecté dans le volume libéré.

## Revendications

1. Procédé de fabrication d'une aube ou pale d'hélice (10) de turbopropulseur en matériau composite comprenant un renfort fibreux densifié par une matrice, le procédé comprenant :
- la réalisation par tissage tridimensionnel d'une ébauche fibreuse (100) en une seule pièce, l'ébauche fibreuse présentant une forme plate s'étendant suivant une direction longitudinale (D_{L}) et une direction transversale (D_{T}) correspondant respectivement à la direction d'envergure entre une partie inférieure (100c) et une partie supérieure (100d) et à la direction de corde de l'aube ou la pale d'hélice à fabriquer, l'ébauche fibreuse (100) comprenant une partie de pied (112) et une partie de profil aérodynamique (111) s'étendant suivant la direction longitudinale (D_{L}) à partir de la partie de pied et suivant la direction transversale (D_{T}) entre une portion de bord d'attaque (100a) et une portion de bord de fuite (100b),
- la mise en forme de l'ébauche fibreuse (100) pour obtenir une préforme fibreuse (200) en une seule pièce ayant ladite partie de profil aérodynamique (111) formant préforme de profil aérodynamique (211) et ladite partie de pied (112) formant préforme de pied (212), et
- la densification de la préforme fibreuse (200) par une matrice pour obtenir une pièce intermédiaire en matériau composite (20) ayant un renfort fibreux constitué par la préforme fibreuse (200) et densifié par la matrice, la pièce intermédiaire comprenant une partie de profil aérodynamique (21) et une partie de pied (22),
**caractérisé en ce que** la partie de pied (112) de l'ébauche fibreuse (100) comprend une déliaison (106) délimitant un logement interne (140) s'étendant à la fois dans la partie de pied et dans la partie de profil aérodynamique de l'ébauche fibreuse, le logement interne (140) débouchant au niveau de la partie inférieure (100c) de l'ébauche fibreuse, **en ce que** la mise en forme de l'ébauche fibreuse (100) comprend l'insertion d'un longeron (130) dans le logement interne (140), le longeron comprenant une portion de conformation de profil aérodynamique (131) positionnée dans la partie de profil aérodynamique (111) de l'ébauche fibreuse (100) et une portion de conformation de pied (132) positionnée dans la partie de pied (112) de l'ébauche fibreuse de manière à former respectivement une partie de préforme de profil aérodynamique (211) et une partie de préforme de pied (212), et **en ce que** le procédé comprend en outre, après l'étape de densification, une étape d'usinage de la partie de pied (22) de la pièce intermédiaire en matériau composite (20) suivant un rayon déterminé (R_{U}) de manière à former une aube ou une pale d'hélice (10) comprenant un pied (12) présentant une forme de révolution et un profil aérodynamique (11).

2. Procédé selon la revendication 1, dans lequel la déliaison (106) présente dans la partie de pied (112) de l'ébauche fibreuse (100) et la portion de conformation de pied (132) du longeron (130) présentent suivant la direction transversale (D_{T}) une largeur (l₁₀₆) supérieure au rayon d'usinage (R_{U}) de la partie de pied (22) de la pièce intermédiaire en matériau composite (20).

3. Procédé selon la revendication 1 ou 2, dans lequel le longeron (130) est en matériau composite comprenant un renfort fibreux densifié par une matrice ou en matériau métallique.

4. Procédé selon l'une quelconque des revendications 1 à 3, dans lequel la mise en forme de l'ébauche fibreuse (100) comprend en outre l'insertion d'une pièce de conformation (150) en matériau rigide alvéolé autour de la portion de conformation de profil aérodynamique (131) du longeron (130).

5. Procédé selon l'une quelconque des revendications 1 à 3, dans lequel la mise en forme de l'ébauche fibreuse (100) comprend en outre l'injection d'un matériau expansif autour de la portion de conformation de profil aérodynamique (131) du longeron (130).

6. Aube ou pale d'hélice (10) de turbopropulseur en matériau composite comprenant un renfort fibreux densifié par une matrice, l'aube ou la pale d'hélice comportant suivant une direction d'envergure (D_{L}) un pied (12) et un profil aérodynamique (11), le pied et le profil aérodynamique s'étendant suivant une direction de corde (D_{T}) entre un bord d'attaque (11a) et un bord de fuite (11b), le renfort fibreux comprenant une préforme fibreuse (200) présentant un tissage tridimensionnel avec une partie de préforme de pied (212) présente dans le pied (12) et une partie de préforme de profil aérodynamique (211) présente dans le profil aérodynamique (11), les parties de préforme de pied et de profil aérodynamique étant liées l'une à l'autre par le tissage tridimensionnel, **caractérisée en ce que** la préforme fibreuse comprend une déliaison délimitant un logement interne (140) débouchant au niveau de la partie de préforme de pied (212), le logement formant une cavité (14) s'étendant à la fois dans le pied (12) et dans le profil aérodynamique (11), **en ce qu'**un longeron (130) est présent dans la cavité (14), le longeron comprenant une portion de conformation de profil aérodynamique (131) positionnée dans une première portion (142) de la cavité 14 et une portion de conformation de pied (132) positionnée dans une deuxième portion (141) de la cavité, et **en ce que** le pied (12) de l'aube ou de la pale d'hélice présente une forme de révolution.

7. Aube ou pale d'hélice selon la revendication 6, dans laquelle la portion de conformation de pied (132) du longeron (130) est exposée au niveau du bord d'attaque (12a) et du bord de fuite (12b) du pied (12) d'aube ou de pale d'hélice, le reste de la portion de conformation de pied du longeron étant recouvert par la préforme fibreuse.

8. Aube ou pale d'hélice (30) selon la revendication 6 ou 7, dans laquelle le longeron (130) est en matériau composite comprenant un renfort fibreux densifié par une matrice ou en matériau métallique.

9. Moteur aéronautique comprenant une pluralité d'aubes ou de pales d'hélice selon l'une quelconque des revendications 6 à 8.

10. Aéronef comprenant au moins un moteur selon la revendication 9.

## Patentansprüche

1. Verfahren zur Herstellung einer Schaufel oder eines Propellerblatts (10) eines Turboprops aus Verbundmaterial, das eine durch eine Matrix verdichtete Faserverstärkung umfasst, wobei das Verfahren umfasst:
- die Verwirklichung eines Faserrohlings (100) in einem Stück durch dreidimensionale Verwebung, wobei der Faserrohling eine flache Form aufweist, die sich einer Längsrichtung (D_{L}) und einer Querrichtung (D_{T}) folgend erstreckt, die jeweils der Spannweitenrichtung zwischen einem unteren Teil (100c) und einem oberen Teil (100d) und der Sehnenrichtung der Schaufel oder des Propellerblatts, die/das hergestellt werden soll, entsprechen, wobei der Faserrohling (100) einen Fußteil (112) und einen aerodynamischen Profilteil (111) umfasst, der sich der Längsrichtung folgend (D_{L}) von dem Fußteil weg und der Querrichtung (DT) folgend zwischen einem Vorderkantenabschnitt (100a) und einem Hinterkantenabschnitt (100b) erstreckt,
- die Formung des Faserrohlings (100), um eine Faservorform (200) in einem Stück zu erhalten, welche den aerodynamischen Profilteil (111), der die Vorform des aerodynamischen Profils (211) bildet, und den Fußteil (112) aufweist, der die Fußvorform (212) bildet, und
- die Verdichtung der Faservorform (200) durch eine Matrix, um ein Zwischenstück (20) aus Verbundmaterial zu erhalten, das eine Faserverstärkung aufweist, die von der Faservorform (200) gebildet wird und durch die Matrix verdichtet ist, wobei das Zwischenstück einen aerodynamischen Profilteil (21) und einen Fußteil (22) umfasst,
**dadurch gekennzeichnet, dass** der Fußteil (112) des Faserrohlings (100) umfasst eine Entbindung (106) umfasst, welche eine innere Aufnahme (140) begrenzt, die sich gleichzeitig in dem Fußteil und in dem aerodynamischen Profilteil des Faserrohlings erstreckt, wobei die innere Aufnahme (140) an dem unteren Teil (100c) des Faserrohlings mündet, dass die Formung des Faserrohlings (100) die Einsetzung eines Längsträgers (130) in die innere Aufnahme (140) umfasst, wobei der Längsträger einen Abschnitt zur Formung des aerodynamischen Profils (131), der in dem aerodynamischen Profilteil (111) des Faserrohlings (100) positioniert wird, und einen Abschnitt zur Formung des Fußes (132) umfasst, der in dem Fußteil (112) des Faserrohlings positioniert wird, um jeweils einen Teil der Vorform des aerodynamischen Profils (211) und einen Teil der Fußvorform (212) zu bilden, und dass das Verfahren ferner nach dem Schritt der Verdichtung einen Schritt der maschinellen Bearbeitung des Fußteils (22) des Zwischenstücks aus Verbundmaterial (20) einem Radius (Ru) folgend umfasst, der auf eine Weise bestimmt wird, um eine Schaufel oder ein Propellerblatt (10) zu bilden, die/das einen Fuß (12), der eine rotationssymmetrische Form aufweist, und ein aerodynamisches Profil (11) umfasst.

2. Verfahren nach Anspruch 1, wobei die Entbindung (106), die in dem Fußteil (112) des Faserrohlings (100) vorliegt, und der Abschnitt des Längsträgers (130) zur Formung des Fußes (132) der Querrichtung (D_{T}) folgend eine Breite (l₁₀₆) aufweisen, die größer ist als der Radius der maschinellen Bearbeitung (Ru) des Fußteils (22) des Zwischenstücks aus Verbundmaterial (20).

3. Verfahren nach Anspruch 1 oder 2, wobei der Längsträger (130) aus Verbundmaterial, das eine durch eine Matrix verdichtete Faserverstärkung umfasst, oder aus Metallmaterial besteht.

4. Verfahren nach einem der Ansprüche 1 bis 3, wobei die Formung des Faserrohlings (100) ferner die Einsetzung eines Formgebungsteils (150) aus steifem zelligem Material um den Abschnitt des Längsträgers (130) zur Formung des aerodynamischen Profils (131) herum umfasst.

5. Verfahren nach einem der Ansprüche 1 bis 3, wobei die Formung des Faserrohlings (100) ferner die Einspritzung eines sich ausdehnenden Materials um den Abschnitt des Längsträgers (130) zur Formung des aerodynamischen Profils (131) herum umfasst.

6. Schaufel oder Propellerblatt (10) eines Turboprops aus Verbundmaterial, umfassend eine Faserverstärkung, die durch eine Matrix verdichtet ist, wobei die Schaufel oder das Propellerblatt einer Spannweitenrichtung (D_{L}) folgend einen Fuß (12) und ein aerodynamisches Profil (11) beinhalten, wobei der Fuß und das aerodynamische Profil sich einer Sehnenrichtung (D_{T}) folgend zwischen einer Vorderkante (11a) und einer Hinterkante (11b) erstrecken, wobei die Faserverstärkung eine Faservorform (200) umfasst, die eine dreidimensionale Verwebung aufweist, mit einem Fußvorformteil (212), der in dem Fuß (12) vorliegt, und einem Vorformteil des aerodynamischen Profils (211), der in dem aerodynamischen Profil (11) vorliegt, wobei der Fußvorformteil und der Vorformteil des aerodynamischen Profils miteinander durch die dreidimensionale Verwebung verbunden sind,
**dadurch gekennzeichnet, dass** die Faservorform eine Entbindung umfasst, die eine innere Aufnahme (140) begrenzt, die an dem Fußvorformteil (212) mündet, wobei die Aufnahme einen Hohlraum (14) bildet, der sich gleichzeitig in dem Fuß (12) und in dem aerodynamischen Profil (11) erstreckt, dass ein Längsträger (130) in dem Hohlraum (14) vorliegt, wobei der Längsträger einen Abschnitt zur Formung des aerodynamischen Profils (131), der in einem ersten Abschnitt (142) des Hohlraums 14 positioniert ist, und einen Abschnitt zur Formung des Fußes (182) umfasst, der in einem zweiten Abschnitt (141) des Hohlraums positioniert ist, und dass der Fuß (12) der Schaufel oder des Propellerblatts eine rotationssymmetrische Form aufweist.

7. Schaufel oder Propellerblatt nach Anspruch 6, wobei der Abschnitt des Längsträgers (130) zur Formung des Fußes (132) an der Vorderkante (12a) und der Hinterkante (12b) des Fußes (12) der Schaufel oder des Propellerblatts freiliegt, wobei der Rest des Abschnitts des Längsträgers für die Formung des Fußes von der Faservorform bedeckt ist.

8. Schaufel oder Propellerblatt (30) nach Anspruch 6 oder 7, wobei der Längsträger (130) aus Verbundmaterial, das eine durch eine Matrix verdichtete Faserverstärkung umfasst, oder aus Metallmaterial besteht.

9. Luftfahrzeugmotor, umfassend mehrere Schaufeln oder Propellerblätter nach einem der Ansprüche 6 bis 8.

10. Luftfahrzeug umfassend zumindest einen Motor nach Anspruch 9.

## Claims

1. A method for manufacturing a propeller blade or airfoil (10) for a turboprop engine made from composite material comprising a matrix-densified fibrous reinforcement, the method comprising:
- producing a fibrous blank (100) in a single piece by three-dimensional weaving, the fibrous blank having a flat shape extending in a longitudinal direction (D_{L}) and a transverse direction (D_{T}) respectively corresponding to the direction of its span between a lower portion (100c) and an upper portion (100d) and in the chord direction of the propeller blade or airfoil to be manufactured, the fibrous blank (100) comprising a root portion (112) and an aerodynamic profile portion (111) extending in the longitudinal direction (D_{L}) from the root portion and in the transverse direction (D_{T}) between a leading-edge portion (100a) and a trailing-edge portion (100b),
- the shaping of the fibrous blank (100) to obtain a single-piece fibrous preform (200) having said aerodynamic profile portion (111) forming an aerodynamic profile preform (211) and said root portion (112) forming a root preform (212), and
- the densification of the fibrous preform (200) by a matrix to obtain an intermediate part made of composite material (20) having a fibrous reinforcement constituted by the fibrous preform (200) and densified by the matrix, the intermediate part comprising an aerodynamic profile portion (21) and a root portion (22),
**characterised in that** the root portion (112) of the fibrous blank (100) comprises a separation (106) delimiting an inner recess (140) extending both into the root portion and into the aerodynamic profile portion of the fibrous blank, the inner recess (140) opening at the lower portion (100c) of the fibrous blank, **in that** the shaping of the fibrous blank (100) comprises the insertion of a spar (130) in the inner recess (140), the spar comprising an aerodynamic profile shaping portion (131) positioned in the aerodynamic profile portion (111) of the fibrous blank (100) and a root shaping portion (132) positioned in the root portion (112) of the fibrous blank in such a way as to respectively form an aerodynamic profile preform portion (211) and a root preform portion (212), and **in that** the method further comprises, after the densification step, a machining step of the root portion (22) of the intermediate part made of composite material (20) along a determined radius (R_{U}) in such a way as to form a propeller blade or airfoil (10) comprising a root (12) having a rotationally symmetric shape and an aerodynamic profile (11).

2. The method according to claim 1, wherein the separation (106) present in the root portion (112) of the fibrous blank (100) and the root shaping portion (132) of the spar (130) have, in the transverse direction (D_{T}), a width (l₁₀₆) greater than the machining radius (R_{U}) of the root portion (22) of the intermediate part made from composite material (20).

3. The method according to claim 1 or 2, wherein the spar (130) is made from composite material comprising a matrix-densified fibrous reinforcement or is made of metal material.

4. The method according to any one of claims 1 to 3, wherein the shaping of the fibrous blank (100) further comprises the insertion of a shaping part (150) made of rigid cellular material around the aerodynamic profile shaping portion (131) of the spar (130).

5. The method according to any one of claims 1 to 3, wherein the shaping of the fibrous blank (100) further comprises the injection of an expansive material around the aerodynamic profile shaping portion (131) of the spar (130).

6. A propeller blade or airfoil (10) for a turboprop engine made from composite material comprising a matrix-densified fibrous reinforcement, the propeller blade or airfoil comprising, in a direction of its span (D_{L}), a root (12) and an aerodynamic profile (11), the root and the aerodynamic profile extending in a chord direction (D_{T}) between a leading edge (11a) and a trailing edge (11b), the fibrous reinforcement comprising a fibrous preform (200) having a three-dimensional weave with a root preform portion (212) present in the root (12) and an aerodynamic profile preform portion (211) present in the aerodynamic profile (11), the preform portions of root and aerodynamic profile being connected to one another by the three-dimensional weave, **characterised in that** the fibrous preform comprises a separation delimiting an inner recess (140) opening at the root preform portion (212), the recess forming a cavity (14) extending both into the root (12) and into the aerodynamic profile (11), **in that** a spar (130) is present in the cavity (14), the spar comprising an aerodynamic profile shaping portion (131) positioned in a first portion (142) of the cavity 14 and a root shaping portion (132) positioned in a second portion (141) of the cavity, and **in that** the root (12) of the propeller blade or airfoil has a rotationally symmetric shape.

7. The propeller blade or airfoil according to claim 6, wherein the root shaping portion (132) of the spar (130) is exposed at the leading edge (12a) and the trailing edge (12b) of the root (12) of the propeller blade or airfoil, the remainder of the root shaping portion of the spar being covered by the fibrous preform.

8. The propeller blade or airfoil (30) according to claim 6 or 7, wherein the spar (130) is made from composite material comprising a matrix-densified fibrous reinforcement or is made of metal material.

9. An aeronautical engine comprising a plurality of propeller blades or airfoils according to any one of claims 6 to 8.

10. An aircraft comprising at least one engine according to claim 9.
